# FASCICULE DE BREVET EUROPEEN

(11) **EP 3 436 302 B1**
(45) Date de publication et mention de la délivrance du brevet: **22.01.2020**
(21) Numéro de dépôt: 17714796.4
(22) Date de dépôt: 03.04.2017
(51) Int. Cl.: B60K 35/00, B60K 37/06, G06F 3/038, G06F 3/041, G06F 3/044, G06F 3/0362

(54) **INTERFACE POUR VÉHICULE AUTOMOBILE**
SCHNITTSTELLE FÜR EIN KRAFTFAHRZEUG
INTERFACE FOR A MOTOR VEHICLE

(30) Priorité: 01.04.2016 FR 1600557
(43) Date de publication de la demande: 06.02.2019
(73) Titulaire: DAV, 94046 Créteil Cedex (FR)
(72) Inventeur: AUBRY, Anthony, 94046 Créteil CEDEX (FR); DALMAYRAC, Stéphane, 94046 Créteil CEDEX (FR)
(74) Mandataire: Delplanque, Arnaud
(86) Numéro de dépôt international: PCT/EP2017/057890
(87) Numéro de publication internationale: WO 2017/168010

(56) Documents cités:
- DE-A1-102010 010 574
- US-A1- 2006 256 090
- US-A1- 2010 214 257
- US-A1- 2014 168 132

## Description

La présente invention concerne une interface pour la commande d'au moins une fonction d'un organe de véhicule automobile.

Dans le domaine automobile, la commande d'organes électriques, comme le dispositif de climatisation, est généralement réalisée au moyen d'un bouton rotatif mécanique.

De façon classique, celui-ci comporte une mollette dont le positionnement angulaire est déterminé par un capteur, par exemple de type optique, ou par un commutateur rotatif électrique. La position angulaire de la molette permet à une unité de traitement de sélectionner une commande particulière et de commander par exemple un actionneur d'un volet dans le système de climatisation.

On connait également un système de commande dans lequel on associe une molette rotative à une dalle ou un écran tactile. Dans ce système, la détection de la position angulaire de la molette est réalisée par une dalle tactile capacitive qui détecte un index métallique porté par la molette. La dalle tactile capacitive permet alors d'une part, la saisie tactile d'informations par détection de l'appui ou du déplacement d'un doigt de l'utilisateur et d'autre part, de mesurer la position de la molette. Cette association est intéressante car on peut programmer l'affichage de l'écran tactile en relation avec plusieurs fonctions à commander. L'écran peut être programmé pour afficher la position des volets et la température du système de climatisation. Ce même écran avec molette peut servir à régler le volume du système audio du véhicule par exemple.

Un interface pour la commande d'au moins une fonction d'un organe de véhicule automobile comportant les caractéristiques du préambule de la revendication 1 est connu du document US2010/214257 A1.

Cependant, le signal de l'index métallique peut être en partie couvert par les signaux produits par les parties métalliques de la molette, ce qui peut réduire la fiabilité de détection de l'index. De plus, si les doigts de l'utilisateur manipulant la molette s'approchent trop près de la dalle tactile capacitive, ceux-ci risquent d'être également détectés par la dalle tactile capacitive. Dans ce dernier cas, le rapport signal/bruit peut ne pas permettre la détection de l'index et conduire à des erreurs d'interprétation de commande.

Un des buts de la présente invention est de proposer une interface améliorée qui résolve au moins en partie ces inconvénients.

A cet effet, l'invention a pour objet une interface pour la commande d'au moins une fonction d'un organe de véhicule automobile, comportant :
- un organe de commande comprenant :
   - un index métallique,
   - un élément mobile de préhension, et
   - un guide, l'élément mobile de préhension étant supporté et guidé en déplacement par le guide, et
- une dalle tactile capacitive configurée pour détecter la position de l'index métallique, le guide étant fixé sur la dalle tactile capacitive,
caractérisé en ce que l'organe de commande comporte en outre un cache solidaire de l'extrémité de l'élément mobile de préhension en regard de la dalle tactile capacitive pour cacher au moins un doigt de l'utilisateur à la dalle tactile capacitive, le cache s'étendant en saillie dans un plan parallèle à la dalle tactile capacitive, l'index métallique étant agencé en vis-à-vis de la dalle tactile capacitive et porté par l'extrémité de l'élément mobile de préhension et/ou par le cache.

Le cache évite de détecter les doigts de l'utilisateur s'approchant de trop près de la dalle tactile capacitive, et également, empêche que les doigts puissent toucher la dalle et déclencher une erreur de détection. Le cache forme ainsi un écran pour les doigts de l'utilisateur, cachant ceux-ci à la dalle tactile capacitive lors de la manipulation de l'organe de commande. En évitant ainsi la détection des doigts de l'utilisateur, le rapport signal/bruit est amélioré. Outre cacher les doigts de l'utilisateur, le cache permet également de prévoir un index métallique aux dimensions agrandies, ce qui permet d'améliorer nettement le rapport signal/bruit et ainsi de fiabiliser la détection du positionnement de l'index métallique. Selon l'invention l'organe de commande comporte des parties métalliques externes portées par l'élément mobile de préhension et électriquement connectées à l'index métallique.

Selon une ou plusieurs caractéristiques de l'interface, prise seule ou en combinaison,
- le cache entoure l'extrémité de l'élément mobile de préhension,
- l'organe de commande est rotatif,
- l'extrémité de l'élément mobile de préhension est circulaire et le cache présente une forme de collerette,
- l'index métallique est au moins partiellement agencé sous le cache, entre le cache et la dalle tactile capacitive,
- l'index métallique est au moins partiellement agencé sous l'extrémité de l'élément mobile de préhension, entre l'élément mobile de préhension et la dalle tactile capacitive,
- l'index métallique est agencé sous le cache et sous l'extrémité de l'élément mobile de préhension, entre d'une part, l'élément mobile de préhension et le cache et d'autre part, la dalle tactile capacitive,
- le cache présente une étendue en saillie comprise entre 4 mm et 12 mm,
- l'épaisseur du cache est comprise entre 2 mm et 4 mm,
- l'élément mobile de préhension et le cache sont formés d'une seule pièce,
- l'interface comporte un écran d'affichage configuré pour afficher des informations associées à la position de l'élément mobile de préhension,
- la dalle tactile capacitive est transparente et l'écran d'affichage est agencé sous la dalle tactile capacitive.

D'autres caractéristiques et avantages de l'invention ressortiront de la description suivante, donnée à titre d'exemple et sans caractère limitatif, en regard des dessins annexés sur lesquels :
- la figure 1 représente une vue schématique en coupe d'un premier exemple d'interface de véhicule automobile,
- la figure 2 montre une vue en perspective, sensiblement de face de l'interface de la figure 1,
- la figure 3 montre une vue de dessous de l'organe de commande de l'interface de la figure 2,
- la figure 4a montre l'interface de la figure 2 en cours de manipulation par un utilisateur,
- la figure 4b est un graphique tridimensionnel représentant le signal mesuré par la dalle tactile capacitive lors de la manipulation de l'organe de commande par l'utilisateur,
- la figure 5 montre une vue partielle en coupe d'un deuxième exemple d'interface de véhicule automobile,
- la figure 6 montre une vue partielle en coupe d'un troisième exemple d'interface de véhicule automobile, et
- la figure 7 représente une vue schématique d'un quatrième exemple d'interface de véhicule automobile.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

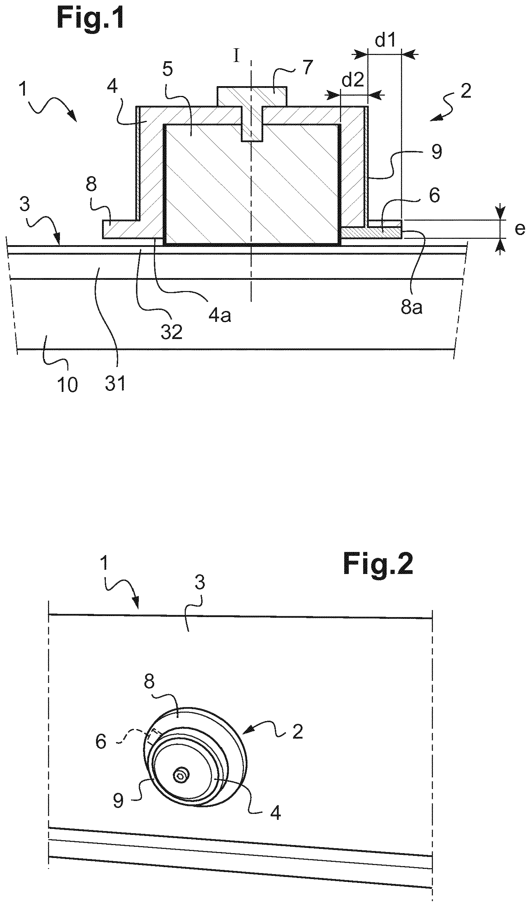

La figure 1 représente une interface 1 pour la commande d'au moins une fonction d'un organe de véhicule automobile, notamment propre à être logé dans une planche de bord ou dans une façade rapportée de véhicule automobile.

Plus précisément, une telle interface 1 trouve une application avantageuse pour les commandes se trouvant au niveau de la console entre les deux sièges avant d'un véhicule automobile pour par exemple commander des fonctions d'un système de climatisation, d'un système audio, d'un système de téléphonie ou encore d'un système de navigation. L'invention peut aussi être appliquée dans une région du véhicule appelée le dôme qui se situe au niveau de l'emplacement habituel du rétroviseur intérieur, pour par exemple commander des lumières intérieures, un verrouillage central, un toit ouvrant, les feux de détresse ou les lumières d'ambiance. Cette interface 1 peut également servir pour les commandes de lève-vitres, des commandes de positionnement des rétroviseurs extérieurs ou encore des commandes de déplacement de sièges motorisés.

L'interface 1 comporte un organe de commande 2 et une dalle tactile capacitive 3.

La dalle tactile capacitive 3 comporte au moins un capteur capacitif 31 pour détecter au moins une variation de la capacité au niveau de la surface de la dalle tactile 3. Ainsi, le capteur capacitif 31 peut par exemple détecter un contact ou un déplacement ou une approche par exemple d'un doigt d'un utilisateur sur la surface de la dalle 3. Pour cela, le capteur capacitif 31 comporte par exemple un réseau d'électrodes, par exemple en ITO (oxyde indium - étain), s'étendant sur tout ou partie d'un support plat par exemple de forme rectangulaire et rigide.

La dalle tactile capacitive 3 comporte en outre une plaque frontale 32 (ou plaque de contact), rigide, destinée à faire face à l'utilisateur une fois montée dans l'habitacle du véhicule et qui a notamment une fonction décorative, telle qu'une plaque de verre pouvant être sérigraphiée ou telle qu'une plaque de plastique portant un film décoré ou une peinture. La plaque frontale 32 présente par exemple une épaisseur supérieure à 0,5 millimètres. Elle est agencée sur le capteur capacitif 31 et permet de procurer la rigidité souhaitée à la dalle 3. La surface tactile et plane de la dalle 3 est ainsi formée par la surface de la plaque frontale 32.

La plaque frontale 32 peut être peinte d'une couleur opaque de manière à cacher les éléments disposés derrière. La dalle tactile capacitive 3 peut alors former ce qui est appelé un pavé tactile ou « Touchpad » en anglais ou un bouton poussoir ou « Push » en anglais.

L'interface 1 peut comporter un écran d'affichage 10, tel qu'un écran TFT (« Thin-Film transistor » en anglais) ou un écran LED ou un écran LCD, configuré notamment pour afficher des informations associées au positionnement d'un élément mobile de préhension 4 de l'organe de commande 2.

L'écran d'affichage 10 peut être disposé sous le capteur capacitif 31 de manière à former un écran tactile (« touchscreen » en anglais). L'écran d'affichage 10 est par exemple fixé par collage au dos d'un support du au moins un capteur capacitif 31 détectant un contact ou une approche d'un utilisateur en face avant. La dalle tactile capacitive 3 comprenant le capteur capacitif 31 et la plaque frontale 32, sont alors transparents.

Selon un autre exemple, l'écran d'affichage 10 est déporté de la dalle tactile capacitive 3.

Outre l'élément mobile de préhension 4, l'organe de commande 2 comporte un index métallique 6 et un guide 5.

Le guide 5 est fixé sur la dalle tactile capacitive 3, par exemple par collage. Le guide 5 est par exemple fixé dans un coin ou un côté de la dalle tactile capacitive 3, pour dégager une surface de la dalle tactile capacitive 3 notamment propre à la saisie tactile d'informations par détection de l'appui ou du déplacement d'un doigt de l'utilisateur sur la surface.

L'élément mobile de préhension 4 est supporté et guidé en déplacement par le guide 5.

L'organe de commande 2 peut comporter un élément de retenue 7, pour retenir l'élément mobile de préhension 4 au guide 5 tout en permettant son déplacement. Selon un autre exemple, l'élément mobile de préhension 4 et le guide 5 présentent des formes complémentaires adaptées pour retenir l'élément mobile 4 au guide 5 tout en permettant son déplacement par rapport au guide 5 fixe.

Selon un exemple de réalisation représenté sur les figures 1 à 6, l'organe de commande 2 est un bouton rotatif.

L'élément mobile de préhension 4 rotatif est supporté et guidé en rotation autour d'un axe de rotation I-I par le guide 5 formant un palier. L'élément mobile de préhension 4 et le guide 5 présentent par exemple des formes générales cylindriques coaxiales. L'index métallique 6 est agencé en vis-à-vis de la dalle tactile capacitive 3.

Il s'agit par exemple d'une languette métallique, par exemple en Cuivre. La position de l'index métallique 6 mobile au-dessus de la dalle tactile capacitive 3, peut être détectée par la dalle tactile capacitive 3, ce qui permet de détecter un déplacement de l'élément mobile de préhension 4 par l'utilisateur. Ce déplacement détecté peut être traité par une unité de commande du véhicule automobile. Le déplacement de l'élément mobile de préhension 4 peut notamment permettre à un utilisateur, de sélectionner ou d'activer une fonction, telle qu'une fonction du système de climatisation, de navigation, de l'autoradio ou le défilement et la sélection d'un choix parmi une liste, telle qu'une liste téléphonique.

L'organe de commande 2 présente des parties métalliques 9 externes, telles que des parties chromées de décoration, portées par l'élément mobile de préhension 4 et qui sont électriquement connectées à l'index métallique 6 (figure 1).

Les parties métalliques 9 peuvent entourer l'élément mobile de préhension 4 sur sa périphérie, formant une bague. Egalement, les parties métalliques 9 peuvent s'étendre sur toute la hauteur de l'élément mobile de préhension 4.

En touchant les parties métalliques 9, l'utilisateur 11 amène des charges en regard de la dalle tactile capacitive 3. La détection de ces charges par la dalle 3 permet d'en déduire la présence de l'utilisateur 11 et le mouvement de l'élément mobile de préhension 4.

L'organe de commande 2 comporte en outre un cache 8 solidaire de l'extrémité 4a de l'élément mobile de préhension 4 située en regard de la dalle tactile capacitive 3 pour cacher au moins un doigt de l'utilisateur à la dalle tactile capacitive 3, le cache 8 s'étendant en saillie dans un plan parallèle à la dalle tactile capacitive 3.

Le cache 8 évite de détecter les doigts de l'utilisateur 11 s'approchant de trop près de la dalle tactile capacitive 3, et également, empêche que les doigts puissent toucher la dalle 3 et déclencher une erreur de détection. Le cache 8 forme ainsi un écran pour les doigts de l'utilisateur, cachant ceux-ci à la dalle tactile capacitive 3 lors de la manipulation de l'organe de commande 2. En évitant la détection des doigts de l'utilisateur, le rapport signal/bruit est augmenté.

L'élément mobile de préhension 4 et le cache 8 peuvent être formés d'une seule pièce, par exemple en matériau plastique.

Dans le cas d'un organe de commande 2 rotatif, l'extrémité 4a de l'élément mobile de préhension 4 peut être circulaire et le cache 8 peut présenter une forme de collerette. Avec un cache 8 faisant axialement le tour de l'élément mobile de préhension 4, on s'assure de pouvoir cacher tous les doigts de l'utilisateur à la dalle tactile capacitive 3, quelque soit la manière avec laquelle l'organe de commande 2 rotatif est saisi par l'utilisateur.

L'index métallique 6 agencé en vis-à-vis de la dalle tactile capacitive 3 est par exemple porté par l'extrémité 4a de l'élément mobile de préhension 4 et par le cache 8.

L'index métallique 6 peut être agencé sous le cache 8 et sous l'extrémité de l'élément mobile de préhension 4, interposé entre d'une part, le cache 8 et l'extrémité 4a de l'élément mobile de préhension 4 et d'autre part, la dalle tactile capacitive 3. L'index métallique 6 s'étend par exemple sous l'étendue en saillie d1 du cache 8 et sous l'étendue d2 de l'extrémité 4a de l'élément mobile de préhension 4, c'est-à-dire dans l'exemple sous l'étendue radiale d1+d2 entre le guide 5 et le bord 8a du cache 8.

En effet, le cache 8 en saillie augmente la surface disponible de l'extrémité 4a de l'élément mobile de préhension 4 en regard de la dalle tactile capacitive 3. Ainsi, lors de la manipulation de l'organe de commande 2 par l'utilisateur, la dalle tactile capacitive 3 ne « voit » plus que l'index métallique 6.

Le cache 8 présente une étendue en saillie d1, radiale dans l'exemple, pouvant être comprise entre 4 mm et 12 mm, l'épaisseur e du cache 8 pouvant être comprise entre 2 mm et 4 mm.

Outre cacher les doigts de l'utilisateur, le cache 8 permet de prévoir un index métallique 6 aux dimensions agrandies, tel qu'un plot de surface 8mm x 8mm, ce qui permet d'améliorer nettement le rapport signal/bruit et ainsi de fiabiliser la détection du positionnement de l'index métallique 6.

En outre, plus l'étendue en saillie d1 du cache 8 présente une grande dimension, plus la circonférence sur laquelle l'index métallique 6 peut pivoter autour de l'axe de rotation I-I est grande, et plus la précision de détection angulaire peut être augmentée.

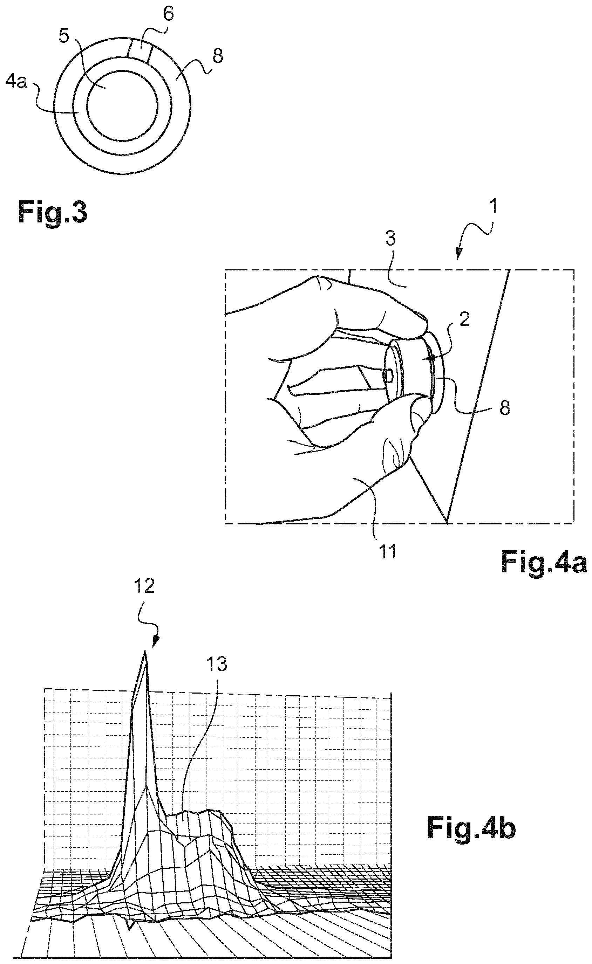

Ainsi en fonctionnement, lorsque l'utilisateur 11 manipule l'organe de commande 2 de l'interface 1, les doigts de l'utilisateur 11 ne sont pas détectés par la dalle tactile capacitive 3, grâce au cache 8 (figure 4a).

Comme on peut le voir sur la figure 4b représentant le signal mesuré par la dalle tactile capacitive 3 lors de la manipulation de l'organe de commande 2 par l'utilisateur 11, un pic 12 se détache clairement du signal mesuré 13.

Ce pic 12 correspond à la position de l'index métallique 6.

Le fait que l'index métallique 6 puisse présenter une plus grande dimension que celui de l'état de la technique, permet que le signal de l'index métallique 6 détecté par la dalle tactile capacitive 3 présente un très bon rapport signal/bruit, permettant de facilement interpréter le souhait de commande de l'utilisateur. La fiabilité de détection de l'index métallique 6 est ainsi améliorée, ce qui réduit les risques d'erreurs d'interprétation de commande.

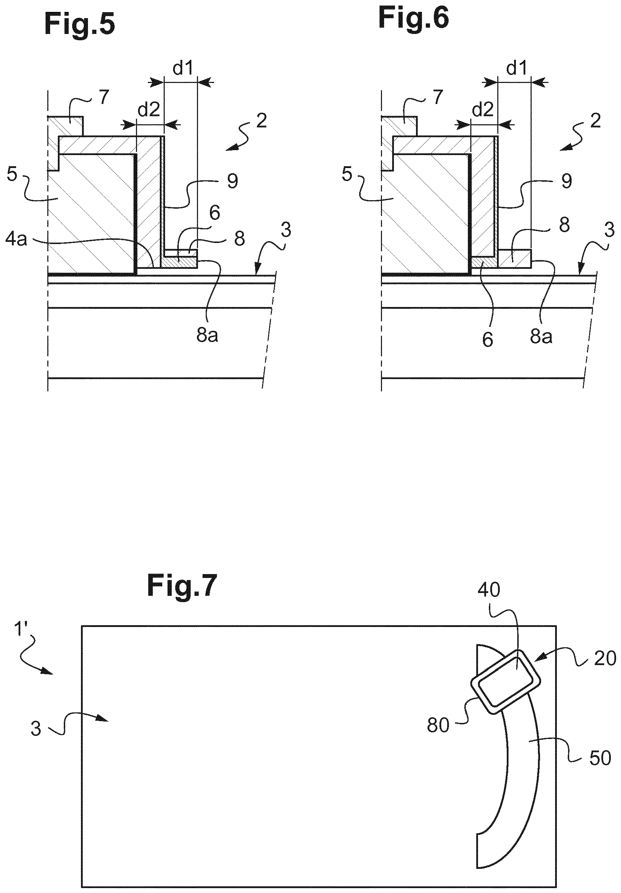

Selon un autre exemple représenté sur la figure 5, l'index métallique 6 est porté par le cache 8. Il est agencé sous le cache 8, entre le cache 8 et la dalle tactile capacitive 3. L'index métallique 6 s'étend par exemple sous l'étendue en saillie d1 du cache 8, radiale dans l'exemple d'un cache 8 en forme de collerette.

Selon un autre exemple représenté sur la figure 6, l'index métallique 6 est porté par l'extrémité 4a de l'élément mobile de préhension 4 en regard de la dalle tactile capacitive 3. L'index métallique 6 est agencé sous l'extrémité 4a de l'élément mobile de préhension 4, entre l'élément mobile de préhension 4 et la dalle tactile capacitive 3. Il s'étend par exemple sous l'étendue d2 de l'extrémité 4a de l'élément mobile de préhension 4, depuis le guide 5 jusqu'au cache 8.

Bien que l'invention décrite en référence aux figures 1 à 6 soit relative à un organe de commande 2 rotatif, l'organe de commande peut être configuré pour être mobile selon d'autres formes de déplacement, tel qu'en translation ou en coulissement, par exemple pour se déplacer linéairement ou suivant une courbe, par exemple en arc de cercle.

Ainsi par exemple et comme représenté sur la figure 7, le guide 50 est formé par un rail, fixé sur la dalle tactile capacitive 3, par exemple par collage, et dans lequel coulisse un élément mobile de préhension 40, par exemple présentant une forme générale cylindrique ou parallélépipédique.

Dans le cas d'un élément mobile de préhension 40 parallélépipédique, et dans le cas où le cache 80 entoure l'extrémité de l'élément mobile de préhension 40, le cache 80 peut présenter une forme générale rectangulaire.

On pourrait aussi envisager à la place du rail, deux nervures de guidage pour le guide 50, linéaires ou courbes, avec une pluralité de positions d'indexage pour l'élément mobile de préhension 40 par exemple réalisées par des bossages élastiques. Pour chaque position indexée, une fonction pourrait être sélectionnée, l'élément mobile de préhension 40 indexé pouvant ou non être également mobile en rotation dans la position indexée, par exemple pour sous-sélectionner une fonction, telle que pour sélectionner la température du système de climatisation.

## Revendications

1. Interface (1 ; 1') pour la commande d'au moins une fonction d'un organe de véhicule automobile, comportant :
- un organe de commande (2 ; 20) comprenant :
- un index métallique (6),
- un élément mobile de préhension (4 ; 40), et
- un guide (5 ; 50), l'élément mobile de préhension (4 ; 40) étant supporté et guidé en déplacement par le guide (5 ; 50), et
- une dalle tactile capacitive (3) configurée pour détecter la position de l'index métallique (6), le guide (5 ; 50) étant fixé sur la dalle tactile capacitive (3), l'organe de commande (2 ; 20) comportant en outre un cache (8 ; 80) solidaire de l'extrémité (4a) de l'élément mobile de préhension (4 ; 40) en regard de la dalle tactile capacitive (3) pour cacher au moins un doigt de l'utilisateur à la dalle tactile capacitive (3), le cache (8 ; 80) s'étendant en saillie dans un plan parallèle à la dalle tactile capacitive (3), l'index métallique (6) étant agencé en vis-à-vis de la dalle tactile capacitive (3) et porté par l'extrémité (4a) de l'élément mobile de préhension (4 ; 40) et/ou par le cache (8 ; 80) et l'organe de commande (2 ; 20) comportant des parties métalliques (9) externes portées par l'élément mobile de préhension (4 ; 40) et électriquement connectées à l'index métallique (6).

2. Interface (1 ; 1') selon la revendication précédente, **caractérisée en ce que** le cache (8 ; 80) entoure l'extrémité de l'élément mobile de préhension (4).

3. Interface (1) selon l'une des revendications précédentes, **caractérisée en ce que** l'organe de commande (2) est rotatif.

4. Interface (1) selon la revendication précédente, **caractérisée en ce que** l'extrémité (4a) de l'élément mobile de préhension (4) est circulaire et le cache (8) présente une forme de collerette.

5. Interface (1 ; 1') selon l'une des revendications précédentes, **caractérisée en ce que** l'index métallique (6) est au moins partiellement agencé sous le cache (8 ; 80), entre le cache (8 ; 80) et la dalle tactile capacitive (3).

6. Interface (1 ; 1') selon l'une des revendications précédentes, **caractérisée en ce que** l'index métallique (6) est au moins partiellement agencé sous l'extrémité (4a) de l'élément mobile de préhension (4), entre l'élément mobile de préhension (4) et la dalle tactile capacitive (3).

7. Interface (1 ; 1') selon l'une des revendications précédentes, **caractérisée en ce que** l'index métallique (6) est agencé sous le cache (8 ; 80) et sous l'extrémité (4a) de l'élément mobile de préhension (4), entre d'une part, l'élément mobile de préhension (4) et le cache (8 ; 80) et d'autre part, la dalle tactile capacitive (3).

8. Interface (1 ; 1') selon l'une des revendications précédentes, **caractérisée en ce que** le cache (8 ; 80) présente une étendue en saillie (d1) comprise entre 4 mm et 12 mm.

9. Interface (1 ; 1') selon l'une des revendications précédentes, **caractérisée en ce que** l'épaisseur (e) du cache (8 ; 80) est comprise entre 2 mm et 4 mm.

10. Interface (1 ; 1') selon l'une des revendications précédentes, **caractérisée en ce que** l'élément mobile de préhension (4 ; 40) et le cache (8 ; 80) sont formés d'une seule pièce.

11. Interface (1 ; 1') selon l'une des revendications précédentes, **caractérisée en ce qu'**elle comporte un écran d'affichage (10) configuré pour afficher des informations associées à la position de l'élément mobile de préhension (4 ; 40).

12. Interface (1 ; 1') selon la revendication précédente, **caractérisée en ce que** la dalle tactile capacitive (3) est transparente et l'écran d'affichage (10) est agencé sous la dalle tactile capacitive (3).

## Patentansprüche

1. Schnittstelle (1; 1') zur Steuerung wenigstens einer Funktion eines Organs eines Kraftfahrzeugs, welche aufweist:
- ein Steuerungsorgan (2; 20), welches umfasst:
- einen metallischen Zeiger (6);
- ein bewegliches Greifelement (4; 40), und
- eine Führung (5; 50), wobei das bewegliche Greifelement (4; 40) von der Führung (5; 50) getragen und verschiebbar geführt wird, und
- ein kapazitives Touch-Panel (3), das dafür ausgelegt ist, die Position des metallischen Zeigers (6) zu erkennen, wobei die Führung (5; 50) auf dem kapazitiven Touch-Panel (3) befestigt ist,
wobei das Steuerungsorgan (2; 20) außerdem eine mit dem Ende (4a) des beweglichen Greifelements (4; 40) fest verbundene Abdeckung (8; 80) gegenüber dem kapazitiven Touch-Panel (3) aufweist, um wenigstens einen Finger des Benutzers vor dem kapazitiven Touch-Panel (3) zu verdecken, wobei sich die Abdeckung (8; 80) in einer zu dem kapazitiven Touch-Panel (3) parallelen Ebene vorstehend erstreckt, wobei der metallische Zeiger (6) gegenüber dem kapazitiven Touch-Panel (3) angeordnet ist und von dem Ende (4a) des beweglichen Greifelements (4; 40) und/oder von der Abdeckung (8; 80) getragen wird und wobei das Steuerungsorgan (2; 20) äußere metallische Teile (9) aufweist, die von dem beweglichen Greifelement (4; 40) getragen werden und mit dem metallischen Zeiger (6) elektrisch verbunden sind.

2. Schnittstelle (1; 1') nach dem vorhergehenden Anspruch, **dadurch gekennzeichnet, dass** die Abdeckung (8; 80) das Ende des beweglichen Greifelements (4) umgibt.

3. Schnittstelle (1) nach einem der vorhergehenden Ansprüche, **dadurch gekennzeichnet, dass** das Steuerungsorgan (2) drehbar ist.

4. Schnittstelle (1) nach dem vorhergehenden Anspruch, **dadurch gekennzeichnet, dass** das Ende (4a) des beweglichen Greifelements (4) kreisförmig ist und die Abdeckung (8) eine Kragenform aufweist.

5. Schnittstelle (1; 1') nach einem der vorhergehenden Ansprüche, **dadurch gekennzeichnet, dass** der metallische Zeiger (6) wenigstens teilweise unter der Abdeckung (8; 80) angeordnet ist, zwischen der Abdeckung (8; 80) und dem kapazitiven Touch-Panel (3).

6. Schnittstelle (1; 1') nach einem der vorhergehenden Ansprüche, **dadurch gekennzeichnet, dass** der metallische Zeiger (6) wenigstens teilweise unter dem Ende (4a) des beweglichen Greifelements (4) angeordnet ist, zwischen dem beweglichen Greifelement (4) und dem kapazitiven Touch-Panel (3) .

7. Schnittstelle (1; 1') nach einem der vorhergehenden Ansprüche, **dadurch gekennzeichnet, dass** der metallische Zeiger (6) unter der Abdeckung (8; 80) und unter dem Ende (4a) des beweglichen Greifelements (4) angeordnet ist, zwischen einerseits dem beweglichen Greifelement (4) und der Abdeckung (8; 80) und andererseits dem kapazitiven Touch-Panel (3).

8. Schnittstelle (1; 1') nach einem der vorhergehenden Ansprüche, **dadurch gekennzeichnet, dass** die Abdeckung (8; 80) eine Erstreckung in der Richtung des Vorstehens (d1) zwischen 4 mm und 12 mm aufweist.

9. Schnittstelle (1; 1') nach einem der vorhergehenden Ansprüche, **dadurch gekennzeichnet, dass** die Dicke (e) der Abdeckung (8; 80) zwischen 2 mm und 4 mm liegt.

10. Schnittstelle (1; 1') nach einem der vorhergehenden Ansprüche, **dadurch gekennzeichnet, dass** das bewegliche Greifelement (4; 40) und die Abdeckung (8; 80) aus einem Stück ausgebildet sind.

11. Schnittstelle (1; 1') nach einem der vorhergehenden Ansprüche, **dadurch gekennzeichnet, dass** sie einen Anzeigebildschirm (10) aufweist, der dafür ausgelegt ist, Informationen anzuzeigen, die mit der Position des beweglichen Greifelements (4; 40) zusammenhängen.

12. Schnittstelle (1; 1') nach dem vorhergehenden Anspruch, **dadurch gekennzeichnet, dass** das kapazitive Touch-Panel (3) durchsichtig ist und der Anzeigebildschirm (10) unter dem kapazitiven Touch-Panel (3) angeordnet ist.

## Claims

1. Interface (1; 1') for controlling at least one function of a unit of a motor vehicle, comprising:
- a control member (2; 20) comprising:
- a metal pointer (6),
- a movable grip element (4; 40)
- a guide (5; 50), the movable grip element (4; 40) being supported and guided in displacement by the guide (5; 50), and
- a capacitive touch tile (3) configured to detect the position of the metal pointer (6), the guide (5; 50) being secured to the capacitive touch tile (3),
the control member (2; 20) further comprising a shroud (8; 80) as one with the end (4a) of the movable grip element (4; 40) facing the capacitive touch tile (3) so as to hide at least one finger of the user from the capacitive touch tile (3), the shroud (8; 80) projecting in a plane parallel to the capacitive touch tile (3), the metal pointer (6) being arranged facing the capacitive touch tile (3) and borne by the end (4a) of the movable grip element (4; 40) and/or by the shroud (8; 80) and the control member (2; 20) comprising external metal parts (9) borne by the movable grip element (4; 40) and electrically connected to the metal pointer (6).

2. Interface (1; 1') according to the preceding claim, **characterized in that** the shroud (8; 80) surrounds the end of the movable grip element (4).

3. Interface (1) according to either of the preceding claims, **characterized in that** the control member (2) is able to rotate.

4. Interface (1) according to the preceding claim, **characterized in that** the end (4a) of the movable grip element (4) is circular and the shroud (8) is in the shape of a collar.

5. Interface (1; 1') according to one of the preceding claims, **characterized in that** the metal pointer (6) is at least partially arranged beneath the shroud (8; 80), between the shroud (8; 80) and the capacitive touch tile (3).

6. Interface (1; 1') according to one of the preceding claims, **characterized in that** the metal pointer (6) is at least partially arranged beneath the end (4a) of the movable grip element (4), between the movable grip element (4) and the capacitive touch tile (3).

7. Interface (1; 1') according to one of the preceding claims, **characterized in that** the metal pointer (6) is arranged beneath the shroud (8; 80) and beneath the end (4a) of the movable grip element (4), between the movable grip element (4) and the shroud (8; 80) on one hand and the capacitive touch tile (3) on the other.

8. Interface (1; 1') according to one of the preceding claims, **characterized in that** the shroud (8; 80) has a projecting extent (d1) of between 4 mm and 12 mm.

9. Interface (1; 1') according to one of the preceding claims, **characterized in that** the thickness (e) of the shroud (8; 80) is between 2 mm and 4 mm.

10. Interface (1; 1') according to one of the preceding claims, **characterized in that** the movable grip element (4; 40) and the shroud (8; 80) are formed in one piece.

11. Interface (1; 1') according to one of the preceding claims, **characterized in that** it comprises a display screen (10) that is configured to display information associated with the position of the movable grip element (4; 40).

12. Interface (1; 1') according to the preceding claim, **characterized in that** the capacitive touch tile (3) is transparent and the display screen (10) is arranged beneath the capacitive touch tile (3).
